# EUROPÄISCHE PATENTSCHRIFT

(11) **EP 2 454 608 B1**
(45) Veröffentlichungstag und Bekanntmachung des Hinweises auf die Patenterteilung: **06.03.2013**
(21) Anmeldenummer: 10726953.2
(22) Anmeldetag: 22.06.2010
(51) Int. Cl.: G01S 17/08, G01S 17/88, G01C 3/00, G01C 15/00, G01B 21/00

(54) **3D-LASER-RAUMVERMESSUNG**
3D LASER SURVEYING
MESURE TRIDIMENSIONNELLE D'ESPACES PAR LASER

(30) Priorität: 14.07.2009 DE 102009027668
(43) Veröffentlichungstag der Anmeldung: 23.05.2012
(73) Patentinhaber: Robert Bosch GmbH, 70442 Stuttgart (DE)
(72) Erfinder: ZIMMERMANN, Thomas, 80639 Muenchen (DE)
(86) Internationale Anmeldenummer: PCT/EP2010/058778
(87) Internationale Veröffentlichungsnummer: WO 2011/006739

(56) Entgegenhaltungen:
- EP-A2- 1 722 192
- US-A1- 2007 157 481

## Beschreibung

### Stand der Technik

Die Erfindung bezieht sich auf ein Laserentfemungsmessgerät zur 3D Raumvermessung.

Derartige Geräte werden von Architekten, Raum- Gebäudeplanern, Immobilienmaklern oder Handwerkern verwendet, um die Größe von Räumen zu bestimmen.

Es sind unterschiedliche Systeme zur dreidimensionaten Raumvermessung bekannt Die Schrift DE 196 48 626 A1 offenbart eine Laserraumvermessungseinheit, bei der nacheinander von einem zentralen Punkt ausgehend durch unterschiedliche Ausrichtungen des Messgeräts mit seinem Messstrahl die unterschiedlichen Messwerte aufgenommen werden. DE 42 42 189 A1 vermisst den Raum über das Aussenden eines Laserstrahls. dessen Reflektion von einer CCD-Kamera aufgenommen wird. In DE 10131 740 A1 wird mit einem Handgerät die Raumvermessung über die Abstandsbestimmung von gegenüberliegenden Wänden beschrieben.

Die EP 1 722 192 A2 offenbart in Flächenkoordinatenmessgerät und ein zugeordnetes Messverfahren mit einem Rechenmittel und einem handhabbaren Gehäuse), welches ein zur Positionierung an einem Flächenpunkt (P) einer Wandfläche (3) ausgebildetes Positionierungsmittel sowie ein Ausgabemittel für ein vom Rechenmittel ermitteltes Messergebnis aufweist, wobei ein zur Bestimmung einer Längsdistanz längs einer Längsmessrichtung geeignetes elektronisches Entfernungsmesssystem sowie ein Quermessmittel zur zusätzlichen Bestimmung einer Querdistanz längs einer quer zu der Längsmessrichtung orientierten Quermessrichtung vorhanden sind. Die Vorrichtung der EP 1 722 192 A2 erlaubt es somit, die relative Position des Messgerätes in einer Ebene zu bestimmen. Dazu besitzt die Vorrichtung der EP 1 722 192 A2 Umlenkmittel, die es erlauben, den Laserstrahl eines Entfernungsmessers in unterschiedlichen Richtungen, insbesondere in zwei orthogonalen Richtungen umzulenken, um so den Abstand des Messgerätes von Referenzmarken in diesen Richtungen zu bestimmen.

Aus der US 2007/0157481 A1 ist ein Laser-Theodolit bekannt, bei dem durch ein Aufsatzgerät ein zusätzliches Lasersignal in den Strahlengang eingespiegelt werden kann. Dazu besitzt das Aufsatzgerät des Theodoliten der US 2007/0157481 A1 einen um 45° gegenüber der Einfallsrichtung des zweiten Lasersignal geneigten Spiegel.

### Aufgabe der Erfindung

Es ist Aufgabe der vorliegenden Erfindung ein einfaches und zuverlässiges Gerät zur schnellen und genauen Vermessung von Räumen bereitzustellen, wobei die Grundfläche des Raumes, wie auch sein Volumen bestimmt werden soll. Das Gerät soll klein und kompakt sein, so dass es von dem Benutzer einfach mitgeführt werden kann.

### Offenbarung der Erfindung

Die Aufgabe wird durch ein Laserentfernungsmessgerät nach Anspruch 1 gelöst Erfindungsgemäß wird dabei ein Laserentfernungsmessgerät mit einem Spiegel bereitgestellt, bei dem der Spiegel im Winkel von 45° in den Strahlengang des Laserentfemungsmessgeräts in Eingriff bringbar ist. Dabei ist der Spiegel so in unterschiedliche Richtungen ausrichtbar, dass der Strahlengang in unterschiedlichen Richtungen abgelenkt wird. Der Begriff "in Eingriff bringbar" bedeutet insbesondere, dass zumindest zwei Positionen des Spiegels vorgesehen sind und dass der Spiegel bei zumindest einer Position die Strahlen ablenkt und bei zumindest einer anderen nicht ablenkt. Der Begriff Strahlengangs bezeichnet das Zusammenwirken von dem emittierten Laserstrahl und dem rücklaufenden Messsignal. Beide Strahlen sind geringfügig parallel versetzt. Sie werden aber im Rahmen dieser Anmeldung als eine einzige Achse des Strahlengangs gesehen.

Erfindungsgemäß ist es durch das Ausrichten des Spiegels möglich, den Laserstrahl umzulenken und Messungen in unterschiedlichen Richtungen vorzunehmen, ohne das Messgerät selbst in seiner Lage verändern zu müssen. Da das Messgerät im Wesentlichen einem üblichen Handmessgerät entspricht, ist es mit dem kleinen und kostengünstigen Anbauteil des Spiegels möglich, den Einsatzbereich des Geräts deutlich zu erhöhen. Wenn es z.B. aus räumlichen Gründen nicht möglich ist, mit seiner Bezugsfläche, also der dem Laseraustritt gegenüberliegenden Fläche des Messgerät, eine Wand zu berühren und hiervon ausgehend die Abstandsmessung durchzuführen, ist es nun möglich, das Messgerät an einer beliebigen Stelle innerhalb der Messdistanz zu positionieren und von diesem Punkt ausgehend zwei Teilmessungen durchzuführen, um so in der Summe die Gesamtdistanz zu erhalten.

Auch wird erfindungsgemäß das Messen dadurch beschleunigt, daß das Messgerät nur einmal positioniert werden muss und anschließend ohne Lageveränderungen unterschiedliche Messungen durchgeführt werden können.

Erfindungsgemäß ist es ferner möglich, dass (Laser-)Entfemungsmessgerät weiter uneingeschränkt als einfaches Hand-Entfernungsmessgerät zu verwenden, mit welchem insbesondere der Abstand paralleler Flächen bestimmbar ist. Dies ist ein Vorteil gegenüber anderen automatischen, größeren und teureren Geräten, welche diese Flexibilität nicht aufweisen. Der Spiegel ist nämlich manuell ohne Einsatz von Werkzeugen mit einer Handbewegung des Anwenders oder motorgesteuert aus dem Strahlengang entfernbar.

Vorzugsweise wird bei dem genannten Ausrichten der Spiegel um eine Achse rotiert, deren Ausrichtung der Strahlrichtung der Laserquelle des Laserentfernungsmessgeräts entspricht. Aufgrund dieser Rotation in Verbindung mit der bezeichneten 45°-Ausrichtung des Spiegels wird der Laserstrahl in eine Ebene abgelenkt, welche senkrecht zur Strahlrichtung der Laserquelle liegt und so kann orthogonal dazu vermessen werden.

In einer bevorzugten Ausführungsform ist der Spiegel Teil einer Spiegeleinheit, die in einem Führungsbereich des Laserentfernungsmessgeräts beweglich gelagert ist und durch Verschieben oder Schwenken in bzw. aus dem Strahlengang bringbar ist. Dies geschieht entweder über ein Verschieben in einer Führung wie bspw. einen Schlitz oder Längsschlitz oder dem Rotieren um einen Drehpunkt. Aufgrund dieser Führung ist die Spiegeleinheit bevorzugt unentfernbar mit dem Messgerät verbunden, so dass sie nicht verloren gehen kann.

In einer alternativen bevorzugten Ausführungsform ist am Laserentfernungsmessgerät ein Drehteil zu dem genannten Ausrichten des Spiegels angeordnet, und der Spiegel ist über eine Schwenkachse gegen das Drehteil so schwenkbar, dass er den Strahlengang des Laserentfernungsmessgeräts entweder im Wesentlichen vollständig abdeckt oder vollständig freigibt Dabei ist vorzugsweise bei einer Zwischenstellung des genannten Winkel von 45° eine Rastung vorgesehen ist. Der Spiegel ist also als eine Art Klappe ausgeführt, welche einerseits komplett und schützend vor die Optik des Messgeräts geklappt werden kann. Alternativ kann mit ihm in der bezeichneten Winkellage die Messung durchgeführt werden. Dies ist eine einfache, kostengünstige und robuste Konstruktion. Dieses Aufklappen wird manuell durchgeführt und ist auch alternativ über eine Motorsteuerung möglich. Weiter bevorzugt umfasst das Laserentfernungsmessgerät eine Antriebsvorrichtung zum Ausrichten der Spiegeleinheit in die unterschiedlichen Richtungen. Der Antrieb kann über einen elektrischen Motor gesehen. Alternativ kann die Spiegeleinheit durch eine aufziehbare Feder mechanisch wie bei einer Eieruhr vorgespannt werden und anschließend sich definiert wieder entspannen. Dabei kann an den gewünschten Winkellagen eine Rastfunktion vorgesehen sein, weiche nach einer durchgeführten Messung von dem Messgerät freigegeben wird, so dass federunterstützt die nächste Messposition eingestellt wird. Durch die Antriebsvorrichtung wird ein einfaches und automatisches Messen in unterschiedlichen Richtungen realisiert.

Ferner kann zusätzlich das Laserentfernungsmessgerät während des Antriebs der Antriebsvorrichtung kontinuierlich eine Vielzahl von Entfernungsmessungen durchführen. Während der Spiegel um 360° rotiert wird, können bspw. 10, 20, 30 oder mehr Messungen durchgeführt werden, wobei entweder jede Messung ausreichend schnell durchgeführt werden muss. Wenn aber andererseits eine Messung eine gewisse Zeitdauer benötigt, muss durch die Elektronik das rotationsbedingte Ändern der Messdistanz korrigiert werden. Durch eine Vielzahl der Messungen können somit komplexere Raumgeometrien aufgenommen werden und es ist möglich, Messfehler, wie sie bspw. durch eine schräge Ausrichtung des Messgeräts verursacht sein können, zu kompensieren.

Wenn alternativ der Spiegel manuell in die unterschiedlichen Richtungen ausgerichtet wird, sind vorzugsweise in unterschiedlichen, um 90° versetzen Positionen Rastungen vorgesehen. Durch das manuelle Ändern der Winkellage werden die Kosten einer Antriebsvorrichtung gespart und durch die genannten Rastungen kann der Spiegel weiterhin wie gewünscht ausgerichtet werden.

Das Laserentfernungsmessgerät ist somit geeignet, über unterschiedliche Messungen fünf Entfernungen in einem kartesischen Koordinatensystem zu messen, wobei eine Messung ohne Verwendung des Spiegels und vier Messungen unter Verwendung des Spiegels mit unterschiedlichen, um 90° versetzten Ausrichtungen durchgeführt werden. Vorzugsweise ist es dabei nicht möglich, Entfernungsmessungen in anderen als den genannten jeweils senkrechten Richtungen durchzuführen. Die genannte Eignung ergibt sich zum einen aus der Optik und Mechanik und zum anderen aus der Messelektronik. Hierin kann ein Vorteil des (tragbaren) Messgeräts gesehen werden, dass einfach und kostengünstig lediglich die Hauptachsen bestimmt werden. Dies ist im Regelfall ausreichend. Alternativ kann zusätzlich ein unabhängiges Längenmesssystem, wie ein weiteres Laserentfernungsmesssystem oder ein digitales Maßband vorgesehen sein, welches in negative X-Richtung misst, um so den Raum komplett vermessen zu können.

Zusätzlich kann ein Maßband und/oder eine integrierte Libelle und/oder x-/y-Lagesensor integriert sein. Mit dem Maßband kann unabhängig von der Lasermessung eine zusätzliche unabhängige Messung durchgeführt werden. Das Maßband kann eine Skala zum Ablesen der gemessenen Entfernung aufweisen. Die mit dem Maßband gemessene Länge kann aber auch elektronisch bestimmt werden und im Display des Messgeräts angezeigt werden. Es ist auch möglich, den Laserstrahl des Entfernungsmessers nur zum Anpeilen eines Punktes an Wand, Boden oder Decke zu verwenden, von dem aus die Entfernung mit dem Maßband gemessen werden soll. Dazu kann der Spiegel gezielt durch Benutzereingabe motorisiert in eine entsprechende Umlenkstellung bewegt werden. Die Vorrichtung kann auch einen Gürtelclip aufweisen, damit sie leicht zugänglich an der Arbeitskleidung angebracht werden kann. Durch eine integrierte Libelle oder elektronischen Lagesensor kann die exakte horizontale bzw. vertikale Lage des Messgeräts bestimmt werden, wie dies für ein gutes Messergebnis wesentlich ist

Alternativ zu einem Führungsbereich der Spiegeleinheit an dem Messgerät kann die Spiegeleinheit auch als separates Teil auf das Messgerät aufsteckbar sein. Vorzugsweise ist es dabei derart zweiteilig, dass der Spiegel gegen das Messgerät rotierbar ist Hierdurch kann es als optionales Zusatzteil vermarktet werden und das Messgerät selbst braucht nicht mechanisch variiert zu werden, sondern kann lediglich durch veränderte Messsoftware angepasst werden. Auch kann ein beschriebener eigenständiger Antrieb in das Anbauteil integrierbar sein.

### Zeichnung

Anhand der Zeichnungen wird die Erfindung nachstehend exemplarisch anhand von Ausführungsbeispielen eingehend erläutert. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen, weiteren Kombinationen zusammenfassen.

Es zeigen:
Fig. 1 ein Laserentfernungsmessgerät ohne Strahlablenkung durch die Spiegeleinheit,
Fig. 2 eine Ablenkung des Strahlengangs vertikal nach oben durch die Spiegeleinheit,
Fig. 3 eine Ablenkung nach rechts in negative y-Richtung,
Fig.4 eine Spiegeleinheit getrennt von dem Laserentfernungsmessgerät und
Fig.5 eine weitere Ausführungsform mit nicht-verschiebbarer Spiegeleinheit, sondern mit klappbarem Spiegel

### Beschreibung der Ausführungsbeispiele

Nachfolgend werden bevorzugte Ausführungsformen beschrieben. Die Erfindung basiert auf der Verwendung und Modifikation eines bestehenden und handelsüblichen Laserentfernungsmessgeräts 1, wie etwa dem Bosch® PLR 30. Dieser digitale Entfernungsmesser weist eine eingebaute Laserstrahlquelle auf, welche einen Laserstrahl 6 emittiert und einen APD- (=avalanche-pin-diode)-Lasersensor auf, welcher den an einer Wand oder sonstigen Oberfläche reflektierten Laserstrahl 5 detektiert. Das Messgerät 1 bestimmt die Entfernung von seiner Bezugsgrundfläche 10 zu dem entsprechenden Reflektionspunkt. Aufgrund von mehreren Messungen der Abstände gegenüberliegender Wände eines Raumes lässt sich die Größe bzw. Grundfläche des Raums bestimmen. Über eine vertikale Messung lässt sich, wenn das Messgerät 1 mit seiner Bezugsfläche 10 auf den Boden gestellt wird, die Höhe des Raumes bestimmen. Das Laserentfernungsmessgerät weist ferner Eingabetasten 7 und ein Display 8 auf, in welchem die Messwerte als Tabelle und/oder maßstäbliche Skizze/Zeichnung und/oder Flächen und Volumina dargestellt werden.

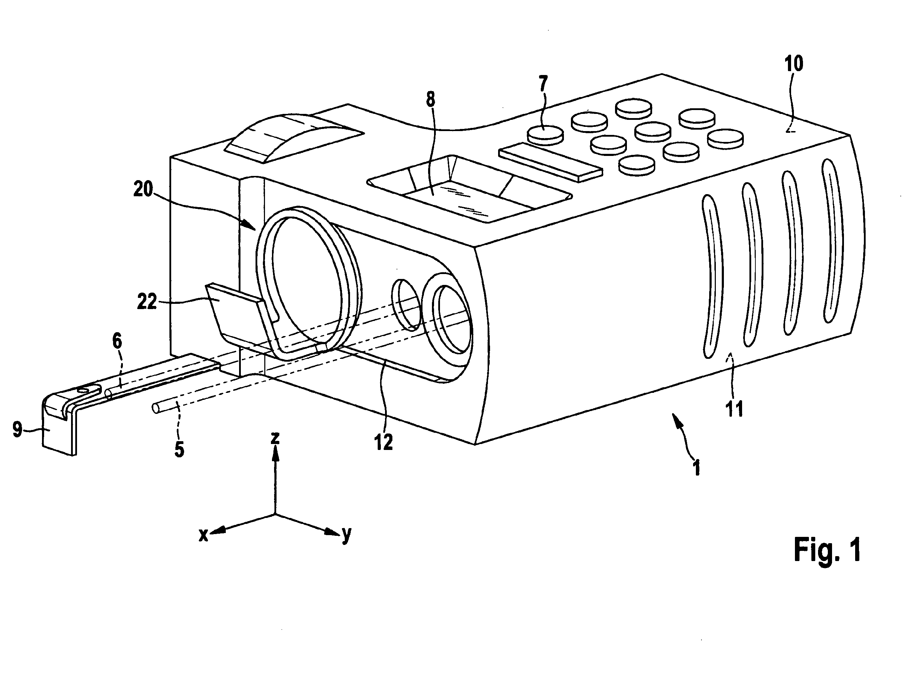

Fig. 1 zeigt an dem Messgerät 1 eine Spiegeleinheit 20, welche in einem Längsschlitz 12 zwischen zumindest zwei Positionen verschiebbar ist In der Freigabeposition gemäß Fig.1 ist die Spiegeleinheit seitlich so versetzt, dass sie den Strahlengang des Messgeräts, welcher aus dem Laserstrahl 6 und dem reflektierten Laserstrahl 5 besteht, nicht beeinflusst. In dieser Lage der Spiegeleinheit 20 ist das Messgerät in der bekannten, üblichen und oben beschriebenen Betriebsweise verwendbar.

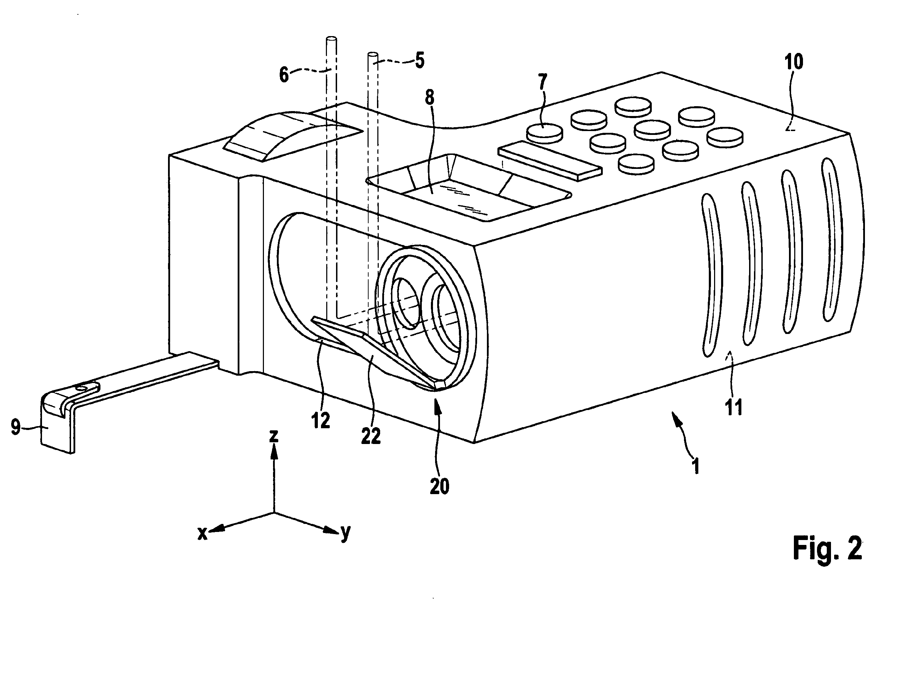

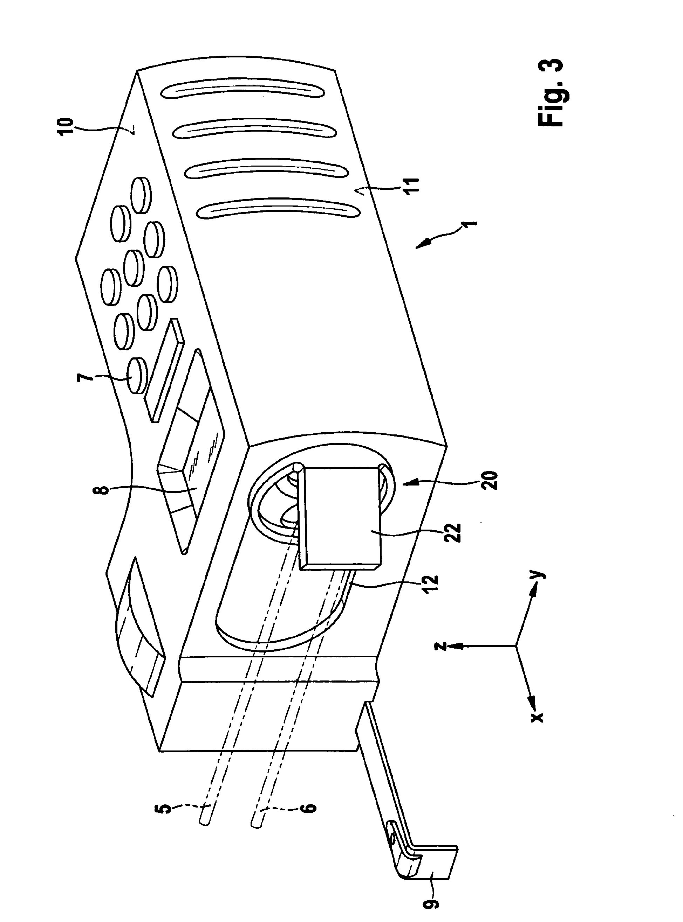

Figuren 2 und 3 zeigen die Spiegeleinheit 20 so in den Strahlengang verschoben, so dass der Spiegel 22 eine Strahlablenkung der Strahlen 5 und 6 bewirkt. Beide Strahlen 5 und 6 sind gemäß Fig. 2 vertikal nach oben abgelenkt und in Fig. 3 in negative y-Richtung bzw. nach rechts aus Sicht des Anwenders abgelenkt. Der Spiegel 22 steht stets in einem Winkel von jeweils 45° zu den Strahlen 5 und 6. Die das Messgerät verlassenden Strahlen der Fig. 1, 2 und 3 sind somit orthogonal zueinander.

Bei der dargestellten Messanordnung der Fig. 2 oder 3 liegt das Messgerät 1 mit seiner Unterseite 11 auf einer vorzugsweise horizontalen Auflagefläche (z.B. Raumboden, Stativ oder Tisch) oder wird mit seiner Bezugsfläche 10 an einer vorzugsweise vertikalen Wand ausgerichtet. Alternativ (nichtdargestellt) kann das Messgerät mit seiner Bezugsfläche 10 auf eine horizontale Auflagefläche gestellt werden, so dass über unterschiedliche Ausrichtungen des Spiegels 22 Messungen in der x-y-Ebene durchgeführt werden können.

Der Unterschied zwischen Fig. 2 und 3 besteht darin, dass die Spiegeleinheit 20 um 90° um den Strahlengang der Laserstrahlen 5 und 6 gedreht ist. In dieser Drehebene (welche senkrecht zu dem emittierten Laser steht) sind auch Ausrichtungen der Spiegeleinheit möglich, dass nach unten oder links gemessen werden kann (nicht dargestellt). Auf diese Art kann das Laserentfernungsmessgerät 1 durch unterschiedliche Ablenkungen der Laserstrahlen an dem Spiegel 22 in vier paarweise orthogonale Richtungen messen. Verbunden mit der Messung gemäß Fig. 1, also ohne Verwendung der Spiegeleinheit 20, ist also eine Messung in fünf Richtungen eines orthogonalen Koordinatensystems möglich. Wenn das Lasermessgerät 1 bei der Messung mit seiner Bezugsfläche 10 an eine Wand eines Raumes ausgerichtet wird, ist also ohne Veränderung der Lage des Messgeräts, sondern nur durch Veränderung der Lage/Ausrichtung der Spiegeleinheit 20 die Bestimmung der Größe des (quaderförmigen) Raumes in den drei unabhängigen Richtungen x, y und z möglich.

Bei der Standardmessung des Messgeräts 1 in x-Richtung wird der gemessene Entfernungswert in Bezug auf die Bezugsfläche 10 ausgegeben. Bei Messungen in der jeweils positiven oder negativen y- oder z-Richtung würde hierdurch die Messung um die Entfernung der Bezugsfläche 10 zu dem Spiegel 22 verfälscht Um die gemessenen Werte zu korrigieren, gibt der Benutzer über die Tasten 7 ein, welche Richtung gerade gemessen wurde. Alternativ können am Messgerät 1 auch Sensoren, wie bspw. Tast- oder Mikroschalter (nicht dargestellt) vorgesehen sein, welche die Lage und Ausrichtung der Spiegeleinheit 20 automatisch erkennen und so der Auswerteelektronik des Messgeräts die Richtung der gemessenen Distanz mitteilen, so dass auf diese Weise die korrekte Messdistanz bestimmt wird.

Der Ursprung des Koordinatensystems wird vorteilhafter Weise in den Reflektionspunkt des Spiegels 22 gelegt.

Das Verschieben der Spiegeleinheit 20 im Längsschlitz kann durch einen elektrischen Antrieb automatisch geschehen. Ferner kann die Spiegeleinheit 20 auch automatisch durch einen elektrischen Antrieb um die Achse der Laserstrahlquelle rotiert werden. Dieser vollautomatische Antrieb ist vorteilhaft, da so ein Messzyklus durch entsprechende Eingaben am Messgerät gestartet werden kann, dessen Ergebnis die Größe des Raumes ist.

Auch ist eine halbautomatische Betriebsweise denkbar, bei der der Anwender zuerst ohne Verwendung der Spiegeleinheit 20 die Distanz in x-Richtung misst, dann manuell die Spiegeleinheit in den Strahlengang bringt und dann ein elektrischer Antrieb die genannte Rotation der Spiegeleinheit 20 und die benötigten Messungen durchführt.

Auch ist alternativ eine Ausführungsform mit komplett manueller Betriebsweise möglich. Hierbei wird kein elektrischer Antrieb vorgesehen, sondern der Anwender muss manuell durch Drehung der Spiegeleinheit 20 die entsprechenden Ausrichtungen der Strahlablenkung einstellen. Zum einfachen und korrekten Einstellen sind Rastungen so vorgesehen, dass bei entsprechender Ausrichtung des Messgeräts 1 auch die abgelenkten Strahlen exakt horizontal bzw. vertikal ausgerichtet sind.

Bisläng wurde das Messen der Distanzen in Richtungen beschrieben, welche jeweils senkrecht zueinander stehen. Denkbar ist auch, dass im Fall eines automatischen Ausrichtens (z.B. durch motorischen Antrieb des Spiegels) kontinuierlich Messwerte aufgenommen werden. Während bei dem Messen auf Basis der Technik des Bosch® PLR 30 eine Messdauer von weniger als 0,5s pro Messung benötigt wird, so ist ein derartiges kontinuierliches Messen insbesondere dann möglich und sinnvoll, wenn die Messdauer jeder einzelnen Entfernungsmessung deutlich reduziert ist. Aufgrund der so erhaltenen Vielzahl der Messwerte lassen sich auch kompliziertere Raumgeometrien bestimmen oder auch Messungenauigkeiten, wie sie beispielsweise bei nicht exaktem horizontalen bzw. vertikalen Ausrichten des Messgeräts 1 auftreten können, rechnerisch ausgleichen.

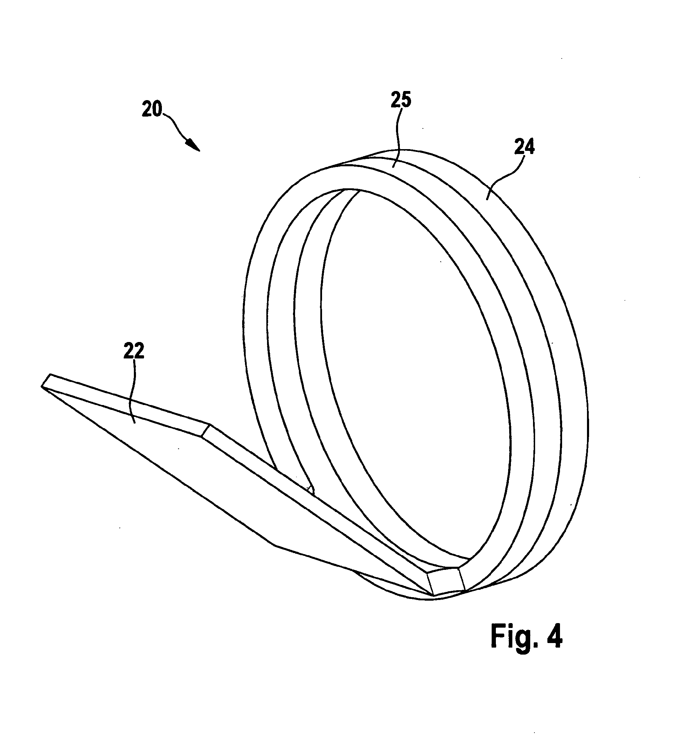

Fig. 4 zeigt eine alternative Spiegeleinheit 20 mit einem Grundteil 24 und einem Drehteil 25, welches gegen das Grundteil 24 drehbar gelagert ist. Das Grundteil 24 lässt sich bspw. über Rastnasen rastend auf das Laserentfernungsmessgerät 1 aufstecken. (nicht dargestellt) In dieser Ausführungsform wird kein Längsschlitz 12 am Messgerät benötigt, da für eine Messung in x-Richtung die Spiegeleinheit 20 komplett entfernt werden kann. Der Spiegel 22 ist in einem 45°-Winkel an dem Drehteil 25 befestigt. Über manuelle Einstellungen des Drehteils 25 gegen das Grundteil 24, verbunden mit entsprechenden Rastungen zwischen Dreh- und Grundteil bei um 90° versetzen Lagen, lassen sich die gewünschten Strahlablenkungen realisieren. Diese Spiegeleinheit kann optional auch eine Federmechanik (nicht dargestellt) enthalten, welche sich vorspannen lässt und anschließend nach dem Prinzip einer Eieruhr in definierter Geschwindigkeit in die Ausgangslage zurückdreht und dabei wird der Spiegel wie beschrieben ausgerichtet Dieses Zurückdrehen kann entweder kontinuierlich geschehen oder diskontinuierlich sein und bei um 90° versetzten Lagen für eine vordefinierte Messdauer von bspw. 0,5s bis 1s anhalten und danach selbsttätig weiterlaufen.

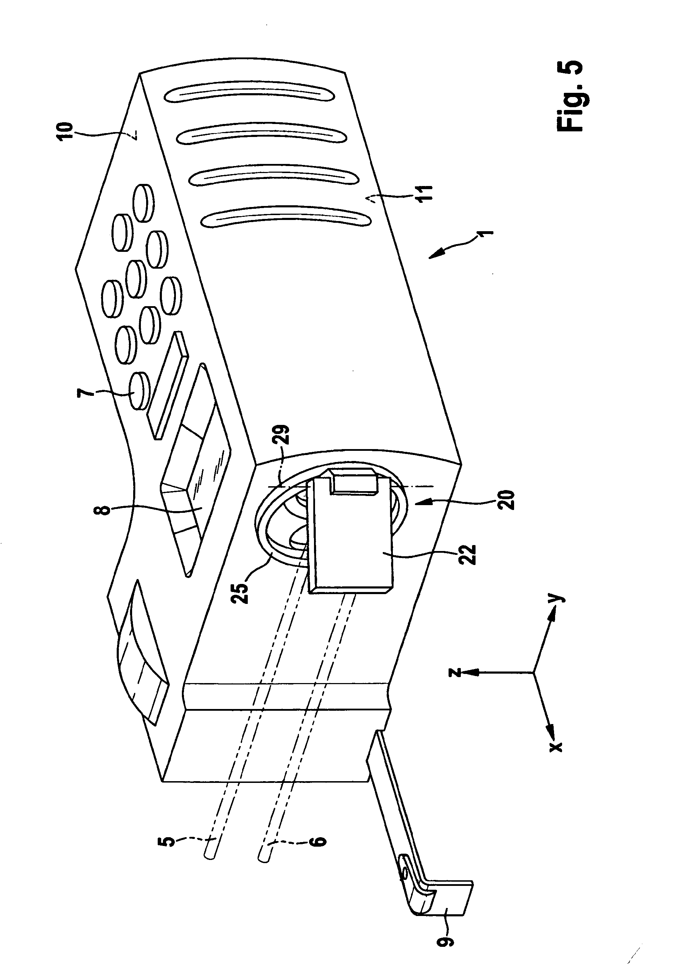

Fig. 5 zeigt eine alternative Ausführungsform, bei der zusätzlich eine Schwenkachse 29 zwischen dem Spiegel 22 und dem Drehteil 25 vorgesehen ist. Das Drehteil 25 ist drehbar im Gehäuse des Messgeräts 1 gelagert, ohne verschiebbar oder entnehmbar zu sein. Fig. 5 zeigt den Spiegel in einem 45° Winkel, so dass über die Rotation des Drehteils 25 Messungen in y- und z-Richtungen durchgeführt werden können. Wenn der Spiegel 22 auf bspw. 90° aufgeklappt wird, so wird eine Messung in x-Richtung möglich. Wenn der Spiegel auf eine 0°-Stellung gegen das Drehteil 25 zugeklappt wird, so wird eine Ruhestellung eingenommen, in der sowohl der Spiegel 22 als auch die Optik des Messgeräts 1 vor Verschmutzungen oder Beschädigungen geschützt sind. Über eine Rastung in der 45°-Stellung lässt sich durch den Anwender einfach die benötigte Winkellage einstellen.

## Patentansprüche

1. Laserentfernungsmessgerät (1) mit einem Spiegel (22), welcher im Winkel von 45° in den Strahlengang (5,6) des Laserentfernungsmessgeräts in Eingriff bringbar ist, wobei der Spiegel (22) so in unterschiedliche Richtungen ausrichtbar ist, dass der Strahlengang (5,6) in entsprechende Richtungen abgelenkt wird, **dadurch gekennzeichnet, dass** das Laserentfernungsmessgerät über unterschiedliche Messungen ohne Verwendung des Spiegels (22) und unter Verwendung des Spiegels (22) mit unterschiedlichen Ausrichtungen geeignet ist, fünf Entfernungen in einem kartesischen Koordinatensystem zu messen, wobei eine Messung ohne Verwendung des Spiegels und vier Messungen unter Verwendung des Spiegels mit jeweils unterschiedlichen Ausrichtungen zum zwecke der Vermessung eines Raumes durchgeführt werden.

2. Laserentfernungsmessgerät gemäß Anspruch 1, **dadurch gekennzeichnet, dass** der Spiegel (22) beim genannten Ausrichten um eine Achse rotierbar ist, deren Ausrichtung der unabgefenkten Strahlrichtung (5) der Laserquelle des Laserentfernungsmessgeräts entspricht.

3. Laserentfernungsmessgerät gemäß Anspruch 1 oder 2, **dadurch gekennzeichnet, dass** der Spiegel (22) Teil einer Spiegeleinheit (20) ist, die in einem Führungsbereich (12) des Laserentfernungsmessgeräts (1) beweglich gelagert ist und durch Verschieben oder Schwenken in oder aus dem Strahlengang (5,6) bringbar ist.

4. Laserentfernungsmessgerät nach einem der Ansprüche 1 oder 2, **dadurch gekennzeichnet, dass** an dem Laserentfernungsmessgerät (1) ein Drehteil (25) zu dem genannten Ausrichten des Spiegels (22) angeordnet ist und der Spiegel (22) über eine Schwenkachse (29) gegen das Drehteil (25) so schwenkbar ist, dass er den Strahlengang (5,6) des Laserentfernungsmessgeräts (1) entweder im Wesentlichen vollständig abdeckt oder vollständig freigibt und dass bei einer Zwischenstellung des genannten Winkel von 45° eine Rastung vorgesehen ist.

5. Laserentfernungsmessgerät (1) gemäß einem der vorangegangenen Ansprüche, **dadurch gekennzeichnet, dass** es eine Antriebsvorrichtung zum Ausrichten des Spiegels (22) in die unterschiedlichen Richtungen umfasst.

6. Laserentfernungsmessgerät (1) gemäß Anspruch 5, **dadurch gekennzeichnet, dass** es geeignet ist, während des Antriebs der Antriebsvorrichtung kontinuierlich eine Vielzahl von Entfernungsmessungen durchzuführen.

7. Laserentfernungsmessgerät gemäß einem der Ansprüche 1 bis 4, **dadurch gekennzeichnet, dass** der Spiegel (22) manuell gegen das Laserentfernungsmessgerät in die unterschiedlichen Richtungen ausrichtbar ist und vorzugsweise dabei in unterschiedlichen, um 90° versetzen Positionen Rastlagen vorgesehen sind.

8. Spiegeleinheit (20) zum Anbau an ein Laserentfernungsmessgerät (1), mit einem Spiegel (22), welcher im Winkel von 45° in den Strahlengang (5,6) des Laserentfernungsmessgeräts in Eingriff bringbar ist, **dadurch gekennzeichnet** der Spiegel (22) so in unterschiedliche Richtungen ausrichtbar ist, dass das Laserentfemungsmessgerät Entfernungen ohne Spiegel in einer und mit Spiegel in vier jeweils unterschiedlichen Richtungen zum zwicke der Vermessung eines Raumes messen kann, wobei der Spiegel (20) durch den Anwender mit einer Handbewegung ohne Einsatz von Werkzeugen, an das Messgerät (1) anbringbar oder von diesem entfernbar ist

## Claims

1. Laser distance measuring instrument (1) having a mirror (22) which can be brought into engagement in the beam path (5, 6) of the laser distance measuring instrument at an angle of 45°, the mirror (22) being alignable in different directions such that the beam path (5, 6) is deflected in corresponding directions, **characterized in that** by means of different measurements without use of the mirror (22) and with use of the mirror (22) with different alignments, the laser distance measuring instrument is suitable for measuring five distances in a Cartesian coordinate system, one measurement being carried out without use of the mirror and four measurements being carried out with use of the mirror, with different alignments in each case, in order to measure a space.

2. Laser distance measuring device according to Claim 1, **characterized in that**, given said alignment, the mirror (22) can be rotated about an axis whose alignment corresponds to the undeflected beam direction (5) of the laser source of the laser distance measuring instrument.

3. Laser distance measuring instrument according to Claim 1 or 2, **characterized in that** the mirror (22) is part of a mirror unit (20) which is moveably mounted in a guide region (12) of the laser distance measuring instrument (1) and can be brought into or out of the beam path (5, 6) by being displaced or pivoted.

4. Laser distance measuring instrument according to either of Claims 1 and 2, **characterized in that** a rotary part (25) is arranged on the laser distance measuring instrument (1) for said alignment of the mirror (22), and the mirror (22) can be pivoted relative to the rotary part (25) via a pivot axis (29) such that it either substantially completely covers or completely uncovers the beam path (5, 6) of the laser distance measuring instrument (1), and **in that** a latch is provided at an intermediate position of said angle of 45°.

5. Laser distance measuring instrument (1) according to one of the preceding claims, **characterized in that** it comprises a drive device for aligning the mirror (22) in the different directions.

6. Laser distance measuring instrument (1) according to Claim 5, **characterized in that** it is suitable for carrying out a multiplicity of distance measurements continuously as the drive device is driving.

7. Laser distance measuring instrument according to one of Claims 1 to 4, **characterized in that** the mirror (22) can be manually aligned in the different directions relative to the laser distance measuring instrument, and in this case latch positions are preferably provided in different positions offset by 90°.

8. Mirror unit (20) for mounting on a laser distance measuring instrument (1), having a mirror (22) which can be brought into engagement in the beam path (5, 6) of the laser distance measuring instrument at an angle of 45°, **characterized in that** the mirror (22) is alignable in different directions such that the laser distance measuring instrument can measure distances without mirror in one and with mirror in four different directions in each case in order to measure a space, the user being able to employ a hand movement without using tools in order to mount the mirror (22) on the measuring instrument (1), or remove it therefrom.

## Revendications

1. Appareil (1) de mesure de distance par laser, présentant un miroir (22) qui peut être engagé à un angle de 45° dans le parcours (5, 6) du faisceau de l'appareil de mesure de distance par laser,
le miroir (22) pouvant être orienté dans différentes directions de telle sorte que le parcours (5, 6) du faisceau soit dévié dans des directions correspondantes,
**caractérisé en ce que**
l'appareil de mesure de distance par laser convient pour différentes mesures n'utilisant pas le miroir (22) ou utilisant le miroir (22) dans différentes orientations, pour mesurer cinq distances dans un système de coordonnées cartésiennes,
une mesure sans recours au miroir et quatre mesures avec recours au miroir, chacune dans une orientation différente, étant exécutées pour mesurer un espace.

2. Appareil de mesure de distance par laser selon la revendication 1, **caractérisé en ce que** lors de ladite orientation, le miroir (22) peut tourner autour d'un axe dont l'orientation correspond à la direction (5) non déviée du faisceau de la source laser de l'appareil de mesure de distance par laser.

3. Appareil de mesure de distance par laser selon les revendications 1 ou 2, **caractérisé en ce que** le miroir (22) fait partie d'une unité de miroir (20) qui est montée à déplacement dans une partie de guidage (12) de l'appareil (1) de mesure de distance par laser et peut être amené dans ou hors du parcours (5, 6) du faisceau par coulissement ou pivotement.

4. Appareil de mesure de distance par laser selon les revendications 1 ou 2, **caractérisé en ce qu'**une partie rotative (25) qui permet ladite orientation du miroir (22) est disposée dans l'appareil (1) de mesure de distance par laser et **en ce que** le miroir (22) peut pivoter par rapport à la partie rotative (25) par l'intermédiaire d'un axe de pivotement (29) de telle sorte qu'il couvre essentiellement complètement le parcours (5, 6) du faisceau de l'appareil (1) de mesure de distance par laser ou le libère essentiellement complètement et **en ce qu'**un encliquetage est prévu dans la position intermédiaire audit angle de 45°.

5. Appareil (1) de mesure de distance par laser selon l'une des revendications précédentes, **caractérisé en ce qu'**il comporte un dispositif d'entraînement qui oriente le miroir (22) dans les différentes directions.

6. Appareil (1) de mesure de distance par laser selon la revendication 5, **caractérisé en ce qu'**il permet d'exécuter en continu plusieurs mesures de distance pendant l'entraînement du dispositif d'entraînement.

7. Appareil de mesure de distance par laser selon l'une des revendications 1 à 4, **caractérisé en ce que** le miroir (22) peut être orienté manuellement dans les différentes directions par rapport à l'appareil de mesure de distance par laser et **en ce que** des positions encliquetées sont de préférence prévues en différentes positions décalées de 90°.

8. Unité (20) de miroir destinée à être montée sur un appareil (1) de mesure de distance par laser et présentant un miroir (22) qui peut être engagé à un angle de 45° dans le parcours (5, 6) du faisceau de l'appareil de mesure de distance par laser, **caractérisée en ce que**
le miroir (22) peut être orienté dans différentes directions de telle sorte que l'appareil de mesure de distance par laser peut mesurer des distances sans miroir dans une direction et avec miroir dans quatre directions différentes en vue de mesurer un espace, l'utilisateur pouvant placer le miroir (22) sur l'appareil de mesure (1) et pouvant l'en enlever par un déplacement de sa main sans devoir utiliser d'outil.
